# EUROPEAN PATENT APPLICATION

(11) **EP 1 217 577 A2**
(43) Date of publication of application: **26.06.2002**
(21) Application number: 01403355.9
(22) Date of filing: 21.12.2001
(51) Int. Cl.: G06K 15/00

(54) **Designating optional printing functions**

(30) Priority: 21.12.2000 JP 2000389176; 14.12.2001 JP 2001382272
(71) Applicant: Ricoh Company, Ltd., Tokyo 143-8555 (JP)
(72) Inventor: Takeda, Kenichi, Tokyo (JP)
(74) Representative: Thévenet, Jean-Bruno

(57) **Abstract**

An image processing apparatus (101) is constructed to receive a print command and print data, interpret a printer description language and store setting values corresponding to printing functions specified by the printer description language into a storage unit (204) if the printing functions are specified in the print command by the printer description language, and interpret a printing option and storing setting values corresponding to printing functions specified by the printing option into the storage unit (204) if the printing functions are specified in the print command by the printing option.

## Description

### BACKGROUND OF THE INVENTION

This application claims the benefit of Japanese Patent Applications No.2000-389176 filed December 21, 2000 and No.2001-382272 filed December 14, 2001, in the Japanese Patent Office, the disclosure of which is hereby incorporated by reference.

### 1. Field of the Invention

The present invention generally relates to image processing units, image forming apparatuses, image forming methods and image processing systems, and more particularly to an image processing unit, image forming apparatus, image forming method and image processing system which receive a print control instruction in a printer description language.

### 2. Description of the Related Art

When instructing a printer apparatus to print from a host unit, a print instruction is issued with respect to the printing apparatus from an application such as Word and Excel which operate under an operating system (OS) such as Windows (registered trademark) and Macintosh (registered trademark), using a printer driver. When issuing such a print instruction, it is possible to specify various printing functions of the printing apparatus, such as paper size selection, paper supply tray selection, paper eject tray selection, duplex printing, stapling and sorting.

On the other hand, depending on the operating environment of the host unit, it is not possible to issue the print instruction with respect to the printing apparatus from the application such as Word and Excel, using the printer driver. For example, from a DOS or UNIX environment, it is not possible to issue a print instruction with respect to the printing apparatus from the application such as Word and Excel, using the printer driver.

Accordingly, a printing option is provided to enable the use of the various printing functions of the printing apparatus from the DOS or UNIX environment. The printing option is sometimes also referred to as a super option. The printing option refers to a character string which is input together with a print command, when sending a print instruction to the printing apparatus from the host unit which operates under the DOS or UNIX environment.

The various printing functions of the printing apparatus can be specified by an identification number or the like. Accordingly, the host unit can instruct the printing apparatus to print using a desired printing function, by inputting the printing option which includes the identification number or the like specifying the desired printing function, together with the print command. However, the usable printing functions are determined by the option configuration of the printing apparatus, and the printing function specified by the identification number becomes different depending on the option configuration of the printing apparatus. In other words, even when the identification number is the same, the printing function specified thereby becomes different if the option configuration of the printing apparatus is different. For this reason, when the host unit instructs the printing apparatus to print, the host unit must first inquire the option configuration of the printing apparatus, acquire the printing functions corresponding to each of the identification numbers from the printing apparatus and confirm the acquired information, and then specify the desired printing functions by the corresponding identification numbers.

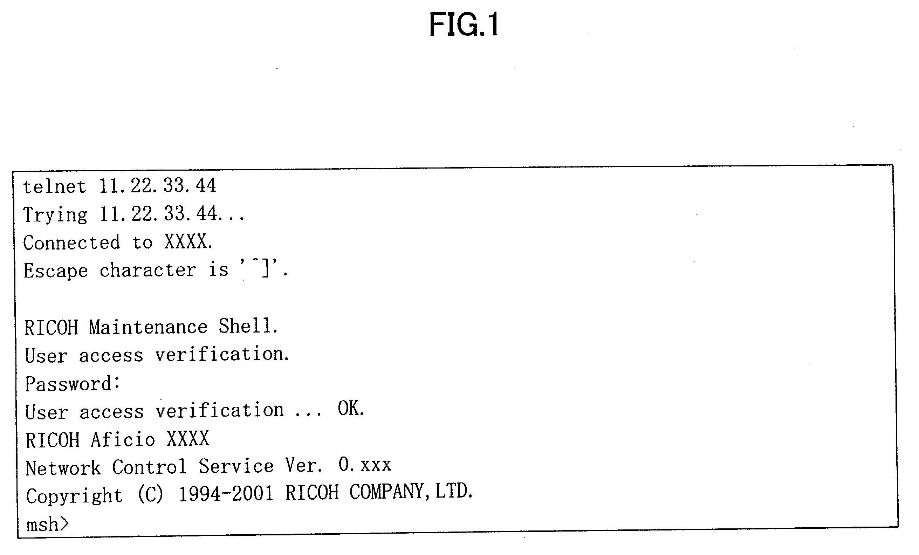

FIG. 1 is a diagram showing an example of a print command when accessing the printing apparatus from the host unit by a telnet command. For the sake of convenience, it is assumed that the Internet Protocol (IP) address of the printing apparatus is "11.22.33.44", and the host unit inquires the option configuration of the printing apparatus by an Info command.

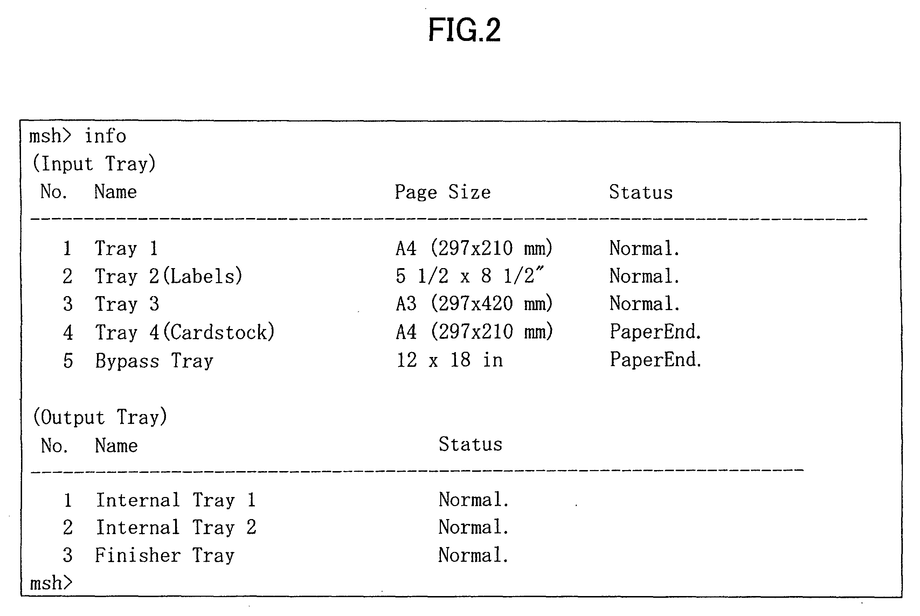

FIG. 2 is a diagram showing an example of the option configuration which is acquired from the printing apparatus. For example, an input identification number "3" corresponds to a third paper supply tray (Tray 3) which supplies paper of page size "A3", and in this case, the status of the third paper supply tray is "Normal" which indicates the A3 size paper has not run out. In addition, an output identification number "2" corresponds to a second internal paper eject tray (Internal Tray 2), and in this case, the status of the second internal paper eject tray is "Normal". An input identification number "5" corresponds to a bypass paper supply tray (Bypass Tray) which supplies paper of page size 12 x 18", and in this case, the status of the bypass paper supply tray is "Paper End" which indicates that the size 12 x 18" paper has run out. In addition, an output identification number "3" corresponds to a finisher paper eject tray (Finisher Tray), and in this case, the status of the finisher paper eject tray is "Normal".

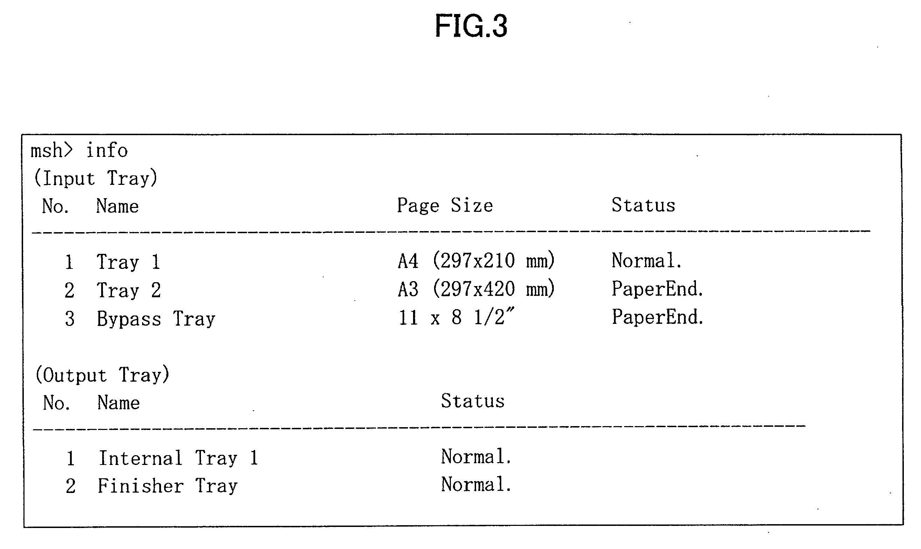

FIG. 3 is a diagram showing another example of the option configuration acquired from the printing apparatus. For example, an input identification number "3" corresponds to a bypass paper supply tray (Bypass Tray) which supplies paper of page size 11 x 8 1/2", and in this case, the status of the bypass paper supply tray is "Paper End" which indicates that the size 11 x 8 1/2" paper has run out. In addition, an output identification number "2" corresponds to a finisher paper eject tray (Finisher Tray), and in this case, the status of the finisher paper eject tray is "Normal".

As may be seen by comparing FIGS. 2 and 3, the printing function which is specified by the same identification number becomes different if the option configuration of the printing apparatus is different. For example, when the user wishes to supply the paper from the bypass paper supply tray and eject the paper on the finisher paper eject tray, the host unit instructs the printing by a print command and printing option "ftp>put prnfile tray=5, outbin=3" with respect to the printing apparatus having the option configuration shown in FIG. 2. However, with respect to the printing apparatus having the option configuration shown in FIG. 3, the host unit instructs the printing by a print command and printing option "ftp>put prnfile tray=3, outbin=2". Here, "tray" is the input identification number specifying the paper supply tray, and "outbin" is the output identification number specifying the paper eject tray.

Therefore, when the host unit instructs the printing apparatus to print in the above described environment, the host unit must conventionally first inquire the option configuration of the printing apparatus, acquire the printing functions corresponding to each of the identification numbers from the printing apparatus and confirm the acquired information, and then specify the desired printing functions by the corresponding identification numbers. For this reason, there was a problem in that the print process cannot be instructed quickly.

On the other hand, it is conceivable to use a printer description language in place of the printing option. The Printer Job Language (PJL) is known as a printer description language which is usable in the DOS or UNIX environment. However, in order to specify a desired printing function by adding the PJL to the print command, for example, there is a problem in that it is difficult to specify the desired printing function unless the user is be a skilled user who has knowledge of the DOS or UNIX environment.

Accordingly, in the above described environment, there was a problem in that it is difficult to quickly instruct from the host unit to the printing apparatus a printing process which effectively utilizes the various printing functions of the printing apparatus.

### SUMMARY OF THE INVENTION

Accordingly, it is a general object of the present invention to provide a novel and useful image processing unit, image forming apparatus, image forming method and image processing system, in which the problems described above are eliminated.

Another and more specific object of the present invention is to provide an image processing unit, an image forming apparatus, an image forming method and an image processing system, which enables a user other than a skilled user having knowledge of the DOS or UNIX environment to easily use various printing functions of a printing apparatus from a DOS or UNIX environment in which a print instruction cannot be issued with respect to the printing apparatus from an application such as Word and Excel using a printer driver, so that it is possible to quickly carry out a printing process by effectively utilizing the various printing functions.

Still another object of the present invention is to provide an image processing unit characterized by receiving means for receiving a print command and print data; first processing means for interpreting a printer description language and storing setting values corresponding to printing functions specified by the printer description language into storage means, if the printing functions are specified in the print command by the printer description language; and second processing means for interpreting a printing option and storing setting values corresponding to printing functions specified by the printing option into the storage means, if the printing functions are specified in the print command by the printing option. According to the image processing unit of the present invention, it is possible to enable a user other than a skilled user having knowledge of the DOS or UNIX environment to easily use various printing functions of a printing apparatus from a DOS or UNIX environment in which a print instruction cannot be issued with respect to the printing apparatus from an application such as Word and Excel using a printer driver, so that it is possible to quickly carry out a printing process by effectively utilizing the various printing functions.

The image processing unit may be characterized in that the setting values corresponding to the printing functions at least specify a paper supply tray and a paper eject tray of an image forming apparatus in which the image processing unit is provided. In this case, it is possible to specify the paper supply tray and the paper eject tray to be used by a simple operation.

The image processing unit may further be characterized by control means for controlling a processing sequence of an interpretation by the first processing means and an interpretation by the second processing means. In this case, it is possible to select whether the setting specified by the printer description language or the setting specified by the printing option is to processed with priority over the other, so as to suit the user's needs.

The image processing unit may further be characterized by initializing means for initializing setting values stored in the storage means prior to storing the setting values by the first or second processing means.

The image processing unit may be characterized in that the print command specifies the printing option by a character string in the printer description language.

The image processing unit may be characterized in that the print command specifies the printing option by a description in a setting file which is prepared in advance.

A further object of the present invention is to provide an image forming apparatus characterized by storage means for storing setting values; receiving means for receiving a print command and print data; first processing means for interpreting a printer description language and storing setting values corresponding to printing functions specified by the printer description language into the storage means, if the printing functions are specified in the print command by the printer description language; second processing means for interpreting a printing option and storing setting values corresponding to printing functions specified by the printing option into the storage means, if the printing functions are specified in the print command by the printing option; and printing means for printing the print data on a recording medium based on the setting values stored in the storage means. According to the image forming apparatus of the present invention, it is possible to enable a user other than a skilled user having knowledge of the DOS or UNIX environment to easily use various printing functions of a printing apparatus from a DOS or UNIX environment in which a print instruction cannot be issued with respect to the printing apparatus from an application such as Word and Excel using a printer driver, so that it is possible to quickly carry out a printing process by effectively utilizing the various printing functions.

The image forming apparatus may be characterized in that the setting values corresponding to the printing functions at least specify a paper supply tray and a paper eject tray of the image forming apparatus. In this case, it is possible to specify the paper supply tray and the paper eject tray to be used by a simple operation.

The image forming apparatus may further be characterized by control means for controlling a processing sequence of an interpretation by the first processing means and an interpretation by the second processing means. In this case, it is possible to select whether the setting specified by the printer description language or the setting specified by the printing option is to processed with priority over the other, so as to suit the user's needs.

The image forming apparatus may further be characterized by initializing means for initializing setting values stored in the storage means prior to storing the setting values by the first or second processing means.

The image forming apparatus may be characterized in that the print command specifies the printing option by a character string in the printer description language.

The image forming apparatus may be characterized in that the print command specifies the printing option by a description in a setting file which is prepared in advance.

Another object of the present invention is to provide an image forming method characterized by a receiving step receiving a print command and print data; a first processing step interpreting a printer description language and storing setting values corresponding to printing functions specified by the printer description language into storage means, if the printing functions are specified in the print command by the printer description language; a second processing step interpreting a printing option and storing setting values corresponding to printing functions specified by the printing option into the storage means, if the printing functions are specified in the print command by the printing option; and a printing step printing the print data on a recording medium based on the setting values stored in the storage means. According to the image forming method of the present invention, it is possible to enable a user other than a skilled user having knowledge of the DOS or UNIX environment to easily use various printing functions of a printing apparatus from a DOS or UNIX environment in which a print instruction cannot be issued with respect to the printing apparatus from an application such as Word and Excel using a printer driver, so that it is possible to quickly carry out a printing process by effectively utilizing the various printing functions.

The image forming method may be characterized in that the setting values corresponding to the printing functions at least specify a paper supply tray and a paper eject tray of an image forming apparatus. In this case, it is possible to specify the paper supply tray and the paper eject tray to be used by a simple operation.

The image forming method may further be characterized by a control step controlling a processing sequence of an interpretation by the first processing step and an interpretation by the second processing step. In this case, it is possible to select whether the setting specified by the printer description language or the setting specified by the printing option is to processed with priority over the other, so as to suit the user's needs.

The image forming method may further be characterized by an initializing step initializing setting values stored in the storage means prior to storing the setting values by the first or second processing step.

The image forming method may be characterized in that the print command specifies the printing option by a character string in the printer description language.

The image forming method may be characterized in that the print command specifies the printing option by a description in a setting file which is prepared in advance.

The image forming method may be characterized in that the first and second processing steps overwrite the setting values specified by the printer description language and the setting values specified by the printing option, in the storage means.

The image forming method may be characterized in that the first and second processing steps carry out an overwrite only when no identical setting is specified by the printer description language and the printing option.

Still another object of the present invention is to provide an image processing system for issuing a print command and print data from a host unit which is connectable to a printing apparatus via a network, characterized in that the printing apparatus is provided with first processing means for interpreting a printer description language and storing setting values corresponding to printing functions specified by the printer description language into storage means, if the printing functions are specified in the print command by the printer description language; second processing means for interpreting a printing option and storing setting values corresponding to printing functions specified by the printing option into the storage means, if the printing functions are specified in the print command by the printing option; and printing means for printing the print data on a recording medium based on the setting values stored in the storage means. According to the image processing system of the present invention, it is possible to enable a user other than a skilled user having knowledge of the DOS or UNIX environment to easily use various printing functions of a printing apparatus from a DOS or UNIX environment in which a print instruction cannot be issued with respect to the printing apparatus from an application such as Word and Excel using a printer driver, so that it is possible to quickly carry out a printing process by effectively utilizing the various printing functions.

The image processing system may be characterized in that the setting values corresponding to the printing functions at least specify a paper supply tray and a paper eject tray of the printing apparatus. In this case, it is possible to specify the paper supply tray and the paper eject tray to be used by a simple operation.

The image processing system may be characterized in that the printing apparatus is further provided with control means for controlling a processing sequence of an interpretation by the first processing means and an interpretation by the second processing means. In this case, it is possible to select whether the setting specified by the printer description language or the setting specified by the printing option is to processed with priority over the other, so as to suit the user's needs.

The image processing system may be characterized in that the printing apparatus is further provided with initializing means for initializing setting values stored in the storage means prior to storing the setting values by the first or second processing means.

The image processing system may be characterized in that the print command issued from the host unit specifies the printing option by a character string in the printer description language.

The image processing system may be characterized in that the print command issued from the host unit specifies the printing option by a description in a setting file which is prepared in advance.

The image processing system may be characterized in that the first and second processing means of the printing apparatus overwrite the setting values specified by the printer description language and the setting values specified by the printing option, in the storage means.

The image processing system may be characterized in that the first and second processing means of the printing apparatus carry out an overwrite only when no identical setting is specified by the printer description language and the printing option.

Other objects and further features of the present invention will be apparent from the following detailed description when read in conjunction with the accompanying drawings.

### BRIEF DESCRIPTION OF THE DRAWINGS

FIG. 1 is a diagram showing an example of a print command when accessing a printing apparatus from a host unit by a telnet command;
FIG. 2 is a diagram showing an example of an option configuration which is acquired from the printing apparatus;
FIG. 3 is a diagram showing another example of the option configuration acquired from the printing apparatus;
FIG. 4 is a diagram showing an embodiment of an image processing system according to the present invention;
FIG. 5 is a system block diagram showing a structure of an important part of a printing apparatus;
FIG. 6 is a diagram showing a procedure for a case where a connection is made from a host unit to the printing apparatus by a ftp command when carrying out a printing not using a super option;
FIG. 7 is a diagram showing a print command which is output following the connection procedure shown in FIG. 6;
FIG. 8 is a diagram showing a procedure for a case where a connection is made from the host unit to the printing apparatus by the ftp command when carrying out a printing using the super option;
FIG. 9 is a diagram showing a print command which is output following the connection procedure shown in FIG. 8;
FIG. 10 is a diagram showing a setting file which is prepared in advance when carrying out a printing using the super option and in which a description for adding the super option is made;
FIG. 11 is a diagram showing a print command which is output to the printing apparatus from the host unit when using the setting file shown in FIG. 10;
FIG. 12 is a diagram showing a case where a data format of a print data is plain text;
FIG. 13 is a diagram showing a case where the data format of the print data is of a format such as that output from a printer driver;
FIG. 14 is a flow chart for explaining a first embodiment of an operation of a printer controller;
FIG. 15 is a flow chart for explaining a second embodiment of the operation of the printer controller;
FIG. 16 is a flow chart for explaining a third embodiment of the operation of the printer controller; and
FIG. 17 is a flow chart for explaining a fourth embodiment of the operation of the printer controller.

### DESCRIPTION OF THE PREFERRED EMBODIMENTS

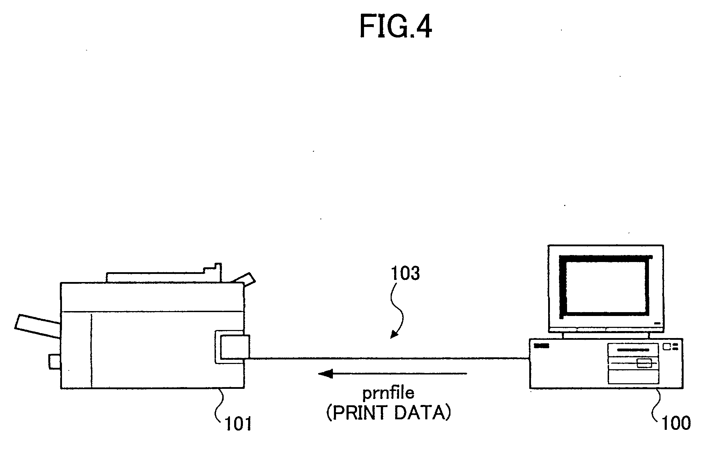

A description will be given of embodiments of an image processing unit according to the present invention, an image forming apparatus according to the present invention, an image forming method according to the present invention, and an image processing system according to the present invention, by referring to FIG. 4 and the subsequent drawings.

FIG. 4 is a diagram showing an embodiment of the image processing system according to the present invention. This embodiment of the image processing system employs an embodiment of the image forming apparatus according to the present invention and an embodiment of an image forming method according to the present invention.

The image processing system shown in FIG. 4 includes a host unit 100 and a printing apparatus 101. The host unit 100 and the printing apparatus 101 are connected via a cable and/or a wireless network 103. A two-way communication can be made between the host unit 100 and the printing apparatus 101 via the network 103. The printing apparatus 101 corresponds to this embodiment of the image forming apparatus.

The host unit 100 is an apparatus which operates in a DOS or UNIX environment in which a print instruction cannot be issued with respect to the printing apparatus 101 from an application such as Word and Excel, using a printer driver.

The host unit 100 may be formed by a general-purpose computer such as a personal computer having a known structure including a CPU, a memory, an input unit such as a keyboard, a display unit, and an interface (I/F) which is connectable to the network 103. The host unit 100 may be of a desk-top type or a portable type.

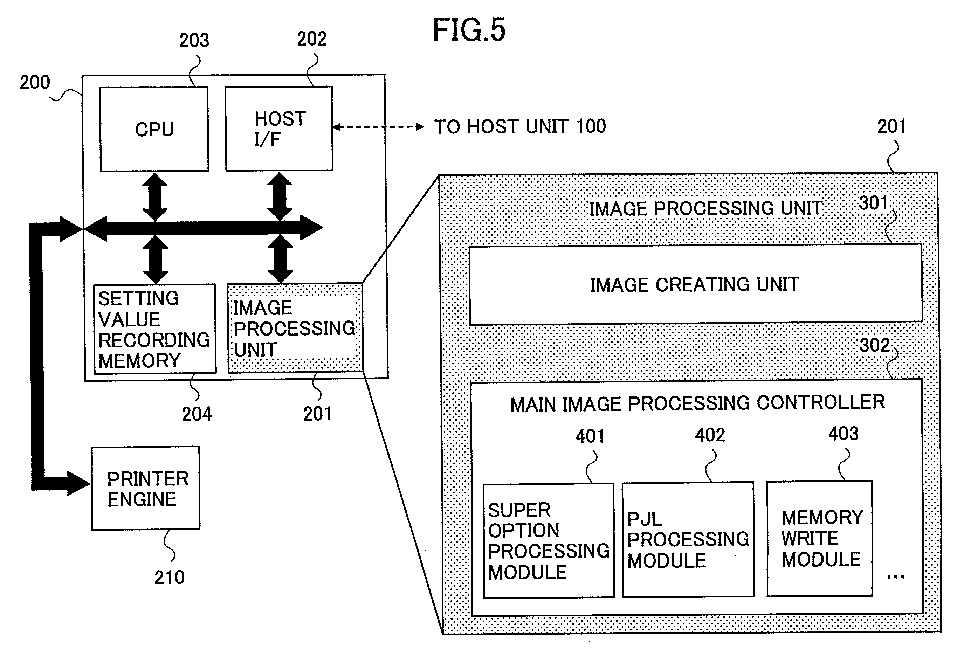

FIG. 5 is a system block diagram showing an important part of the printing apparatus 101. As shown in FIG. 5, the printing apparatus 101 includes a printer controller 200 and a printer engine 210. The printer controller 200 includes an image processing unit 201, a host interface (I/F) 202, a CPU 203, and a setting value recording memory 204. In addition, the image processing unit 201 has a software structure shown on an enlarged scale on the right portion of FIG. 5. The image processing unit 201 includes an image creating section 301 and a main image processing controller 302. A printing option (hereinafter referred to as a super option) processing module 401, a printer job language (PJL) processing module 402, and a memory write module 403 are included within the main image processing controller 302. The printer engine 210 has a known structure for printing image data on a recording medium such as paper, using an image forming system such as the electrophotography system and the ink-jet system. The printer controller 200 corresponds to this embodiment of the image processing unit.

The printing apparatus 101 is also provided with other mechanisms such as a plurality of paper supply trays (input trays) for supplying paper of various sizes and paper supply mechanisms linked thereto, one or a plurality of paper eject trays (output trays) to which printed paper is ejected and paper eject mechanisms linked thereto, a stapling mechanism, a sorting mechanism, and a duplex printing mechanism. However, the structures and operations of these other mechanisms are known, and the illustration and description thereof will be omitted in this specification.

Commands and data are exchanged between the host unit 100 and the printing apparatus 101 via the host I/F 202. Accordingly, state information related to the option configuration and the like of the printing apparatus 101 is output to the host unit 100 via the host I/F 202. In addition, commands such as a print command issued from the host unit 100, a printing option (super option), and data such as print data are input to the printing apparatus 101 via the host I/F 202.

The CPU 203 controls the operation of the printer controller 200, so as to control various operations of the printing apparatus 101. Computer programs executed by the CPU 203 are stored in a storage unit (not shown) having a known structure. The storage unit may be formed by a storage apparatus which uses a recording medium such as a magnetic recording medium, an optical recording medium and a magneto-optical recording medium, or a semiconductor memory such as a ROM. Furthermore, the storage unit may be formed by a portion of the setting value recording memory 204.

The setting value recording memory 204 stores various setting values which are set by the super option and the PJL, that is, the setting values corresponding to the various printing functions. The setting values are the values used for specifying the paper supply trays and the paper eject trays, for example.

The image creating section 301 within the image processing unit 201 interprets the print command and the printing option (super option) which are input via the host I/F 202, and develops the print data into image data having a data format suited for the image forming (printing) system employed. The main image processing controller 302 within the image processing unit 201 controls the operation of the printing apparatus 101 until the image data are printed, including the paper supply, paper ejection, stapling and the like, and also the state of the printing apparatus 101.

The super option processing module 401 within the main image processing controller 401 interprets the information specified by the super option, and writes the setting values which are specified by the super option interpretation into the setting value recording memory 204 under the control of the memory write module 403. The PJL processing module 402 within the main image processing controller 302 interprets the information specified by the PJL, and writes the setting values which are specified by the PJL interpretation into the setting value recording memory 204 under the control of the memory write module 403.

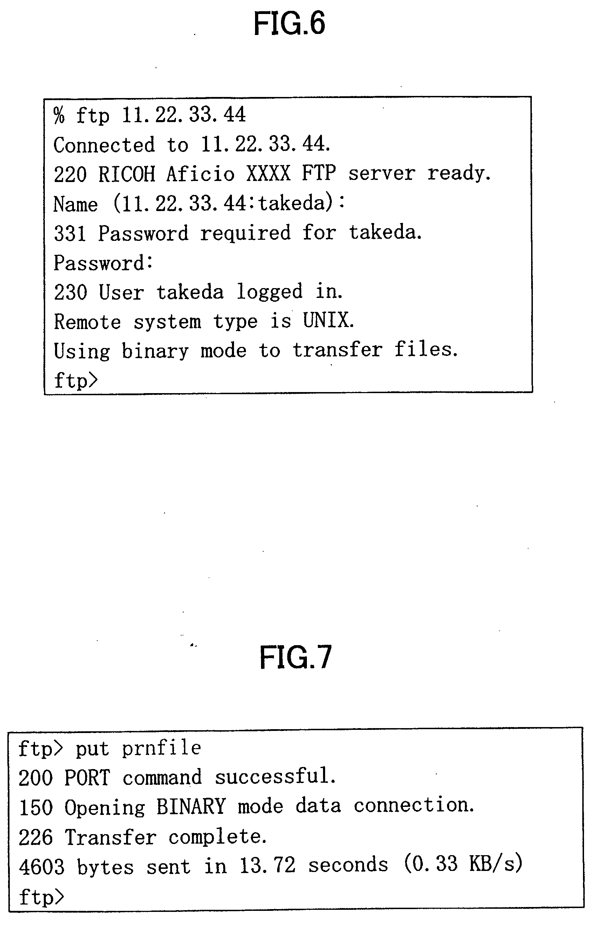

FIG. 6 is a diagram showing a procedure for a case where a connection is made from the host unit 100 to the printing apparatus 101 by a ftp command when carrying out a printing not using the super option. For the sake of convenience, FIG. 6 shows a case where the Internet Protocol (IP) address of the printing apparatus 101 is "11.22.33.44".

FIG. 7 is a diagram showing a print command which is output from the host unit 100 to the printing apparatus 101 following the connection procedure shown in FIG. 6. For the sake of convenience, FIG. 7 shows a case where print data "prnfile" is output to the printing apparatus 101 by the print command.

By carrying out the connection procedure shown in FIG. 6 and outputting the print command with respect to the printing apparatus 101 from the host unit 100, the print data "prnfile" are printed using the paper supply tray and the paper eject tray which are set in the printing apparatus 101.

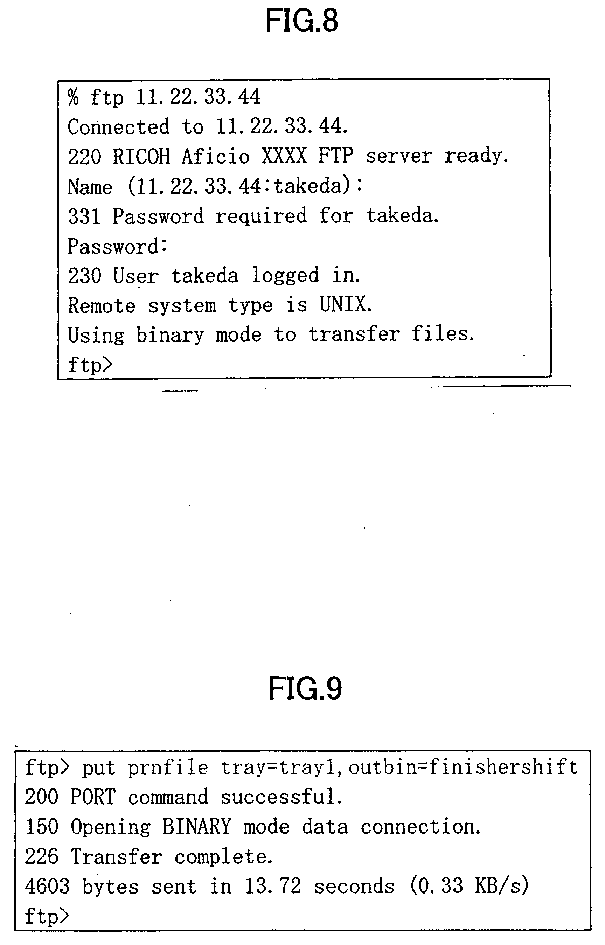

FIG. 8 is a diagram showing a procedure for a case where a connection is made from the host unit 100 to the printing apparatus 101 by the ftp command when carrying out a printing using the super option. For the sake of convenience, FIG. 8 shows a case where the Internet Protocol (IP) address of the printing apparatus 101 is "11.22.33.44".

FIG. 9 is a diagram showing a print command which is output from the host unit 100 to the printing apparatus 101 following the connection procedure shown in FIG. 8. For the sake of convenience, FIG. 9 shows a case where the print data "prnfile" and the specified super option "tray=tray1, outbin=finishershift" are output to the printing apparatus 101 by the print command.

By carrying out the connection procedure shown in FIG. 8 and outputting the print command which specifies the super option with respect to the printing apparatus 101 from the host unit 100, the print data "prnfile" are printed in the printing apparatus 101 using the paper supply tray and the paper eject tray which are set by the specified super option.

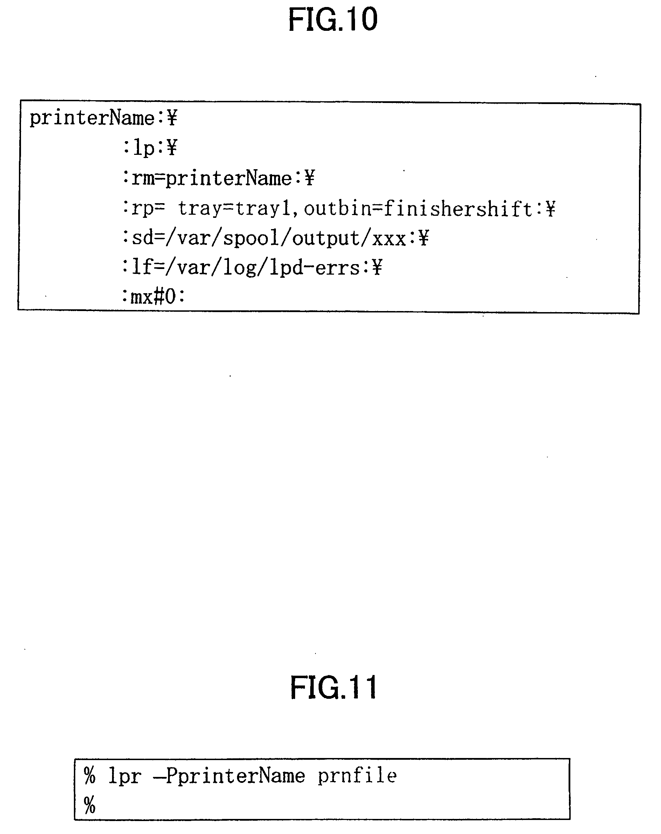

FIG. 10 is a diagram showing a setting file which is prepared in advance when carrying out a printing in the above described environment using the super option and in which a description for adding the super option is made. In the particular case shown in FIG. 10, a super option ":rp=tray=tray1, outbin=finishershift:¥" is described in a printer setting file "/etc/printcap".

FIG. 11 is a diagram showing a print command which is output to the printing apparatus 101 from the host unit 101 when using the setting file shown in FIG. 10. For the sake of convenience, FIG. 11 shows a case where the print data "prnfile" are output to the printing apparatus 101 by the print command which specifies the super option.

By outputting the setting file shown in FIG. 10 describing the super option and the print command shown in FIG. 11 from the host unit 100 to the printing apparatus 101, the print data "prnfile" are printed in the printing apparatus 101 using the paper supply tray and the paper eject tray which are set by the specified super option. In other words, it is possible to use the super option without having to inquire the option configuration of the printing apparatus 101 from the host unit 100 to the printing apparatus 101. In addition, since the super option is described in the setting file in this case, there is no need to specify the super option by a command line. Of course, the instruction of the printing using the setting file cannot be made in an environment in which the ftp command is used.

Generally, the data format of the print data is plain text when using the super option. However, the data format of the print data may of course be a format such as that output from a printer driver.

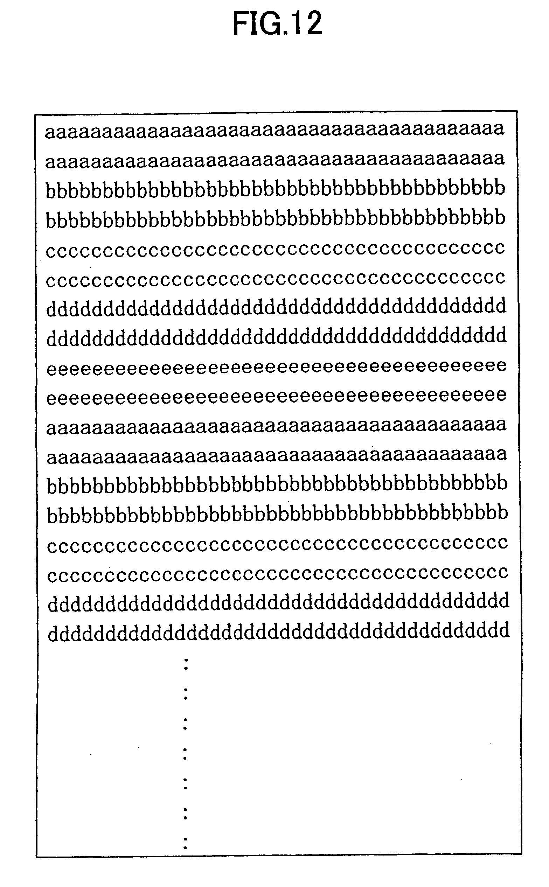

FIG. 12 is a diagram showing a case where the data format of the print data is plain text. As shown in FIG. 12, the print data are made up solely of simple text data in the case of the plain text.

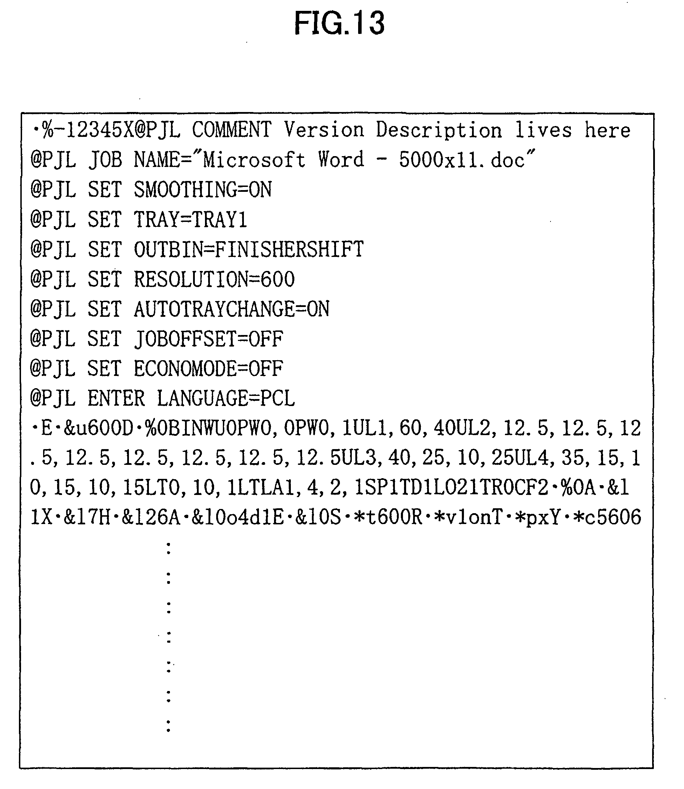

FIG. 13 is a diagram showing a case where the data format of the print data is of a format such as that output from the printer driver. In FIG. 13, " · %-12345X@PJL COMMENT Version Description lives here" at the first line to "@PJL ENTER LANGUAGE=PCL" at the tenth line are PJL, and in this particular case, PCL data, which are PDL data, follow the PJL from the eleventh line. The PJL can specify the paper supply tray, the paper eject tray and the like, similarly to the super option which specifies the paper supply tray, the paper eject tray and the like. In FIG. 13, a "·" denotes a control code "escape (ESC)" the illustration of which is omitted for the sake of convenience.

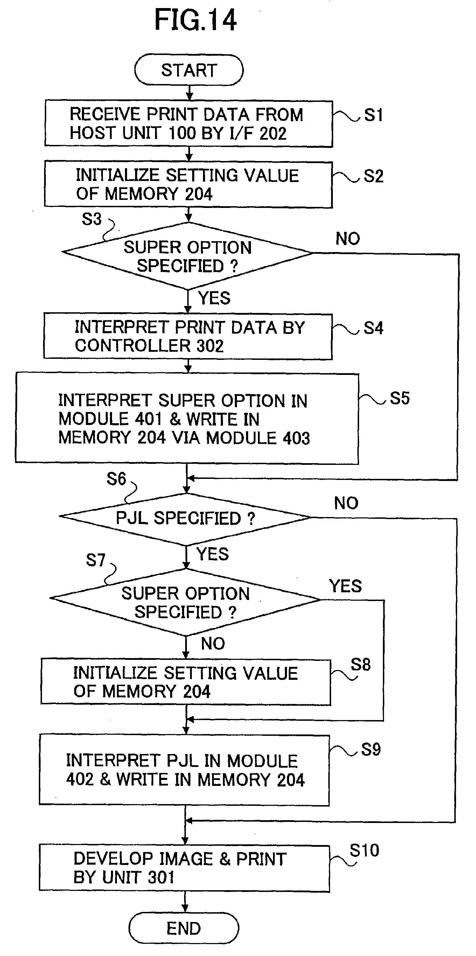

Next, a description will be given of various embodiments of an operation of the printer controller 200 of this embodiment, by referring to flow charts shown in FIGS. 14 through 17.

FIG. 14 is a flow chart for explaining a first embodiment of the operation of the printer controller 200. In this embodiment, a processing sequence is "super option" → "PJL", and an overwrite is always carried out in a PJL process.

In FIG. 14, a step S1 receives the print command and the data from the host unit 100 by the host I/F 202. A step S2 interprets the received print command by the main image processing controller 302. A step S3 decides by the main image processing controller 302 whether or not the super option is specified (that is, a setting is made by the super option), and the process advances to a step S4 if the decision result is YES, and the process advances to a step S6 which will be described later if the decision result is NO. The step S4 initializes the setting values within the setting value recording memory 204 by the main image processing controller 302. In addition, a step S5 interprets the super option by the super option processing module 401 within the main image processing controller 302, and writes the setting values included in the specified super option into the setting value recording memory 204 via the memory write module 403.

After the step S5 or, if the decision result in the step S3 is NO, the step S6 decides by the main image processing controller 302 whether or not the PJL is specified (that is, a setting is made by the PJL), and the process advances to a step S7 if the decision result is YES, and the process advances to a step S10 which will be described later if the decision result is NO. The step S7 decides by the main image processing controller 302 whether or not the super option is specified (that is, a setting is made by the super option), and the process advances to a step S8 if the decision result is NO, and the process advances to a step S9 which will be described later if the decision result is YES. The step S8 initializes the setting values within the setting value recording memory 204 by the main image processing controller 302. After the step S8 or, if the decision result in the step S7 is YES, the step S9 interprets the specified PJL by the PJL processing module 402 within the main image processing controller 302, and writes the setting values included in the specified PJL into the setting value recording memory 204 via the memory write module 403.

After the step S9 or, if the decision result in the step S6 is NO, a step S10 develops the print data in a storage unit inside or outside the printer controller 200 by the image creating section 301 within the image processing unit 201, so as to convert the print data into image data having a data format suited for the printing system employed by the printer engine 210, and carries out a printing process to print the image data by the printer engine 210. The printing process is carried out based on the settings specified by the super option or the PJL if any. The storage unit in which the image data are developed, may be formed by a portion of the setting value recording memory 204. The process ends after the step S10. This first embodiment of the operation of the printer controller 200 is particularly effective for a user who places priority on the specified PJL included in the print command.

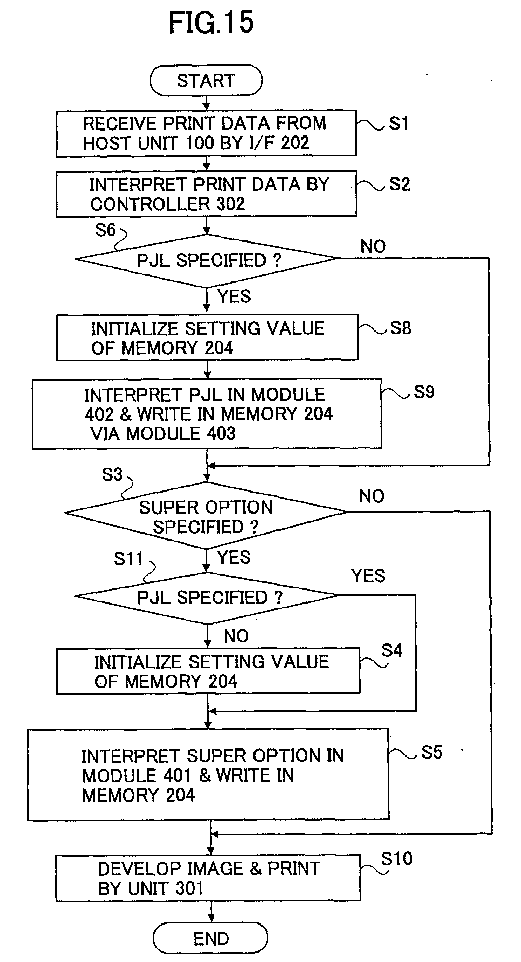

FIG. 15 is a flow chart for explaining a second embodiment of the operation of the printer controller 200. In this embodiment, a processing sequence is "PJL" → "super option", and an overwrite is always carried out in a super option process. In FIG. 15, those steps which are the same as those corresponding steps in FIG. 14 are designated by the same reference numerals, and a description thereof will be omitted.

In FIG. 15, the step S6 is carried out after the step S2, and the process advances to the steps S8 and S9 if the decision result in the step S6 is YES. The process advances to the step S3 if the decision result in the step S6 is NO. The process advances to a step S11 if the decision result in the step S3 is YES, and the process advances to the step S10 if the decision result in the step S3 is NO. The step S11 decides by the main image processing controller 302 whether or not the PJL is specified (that is, a setting is made by the PJL), and the process advances to the step S4 if the decision result is NO, and the process advances to the step S5 if the decision result is YES. The step S10 is carried out after the step S5. This second embodiment of the operation of the printer controller 200 is particularly effective for a user who places priority on the specified super option included in the print command.

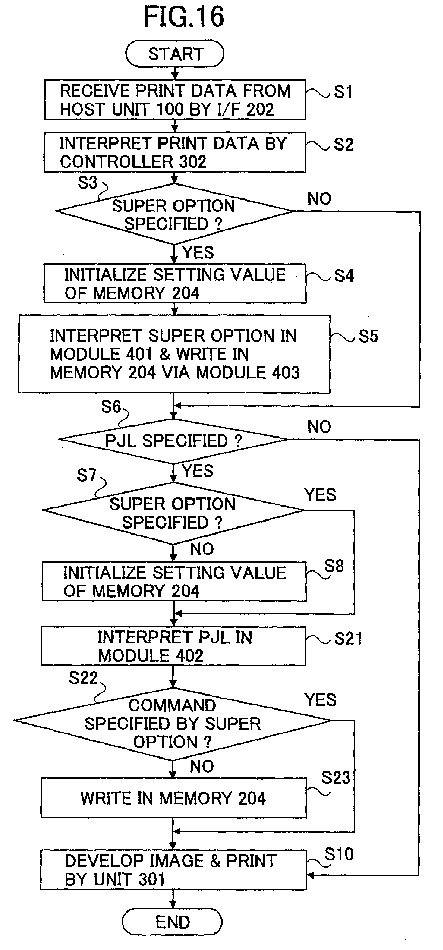

FIG. 16 is a flow chart for explaining a third embodiment of the operation of the printer controller 200. In this embodiment, a processing sequence is "super option" → "PJL", and an overwrite is carried out in a PJL process only when the same setting is not made by the super option. In FIG. 16, those steps which are the same as those corresponding steps in FIG. 14 are designated by the same reference numerals, and a description thereof will be omitted.

In FIG. 16, after the step S8 or, if the decision result in the step S7 is YES, a step S21 interprets the specified PJL by the PJL processing module 402 within the main image processing controller 302. A step S22 decides by the main image processing controller 302 whether or not the command specified by the interpreted PJL is specified by the super option. The process advances to a step S23 if the decision result in the step S22 is NO, and the process advances to the step S10 if the decision result in the step S22 is YES. The step S23 writes the setting value included in the specified PJL, by the PJL processing module 402 within the main image processing controller 302, into the setting value recording memory 204 via the memory write module 403, and the process advances to the step S10. This third embodiment of the operation of the printer controller 200 is particularly effective for a user who places priority on the specified super option included in the print command.

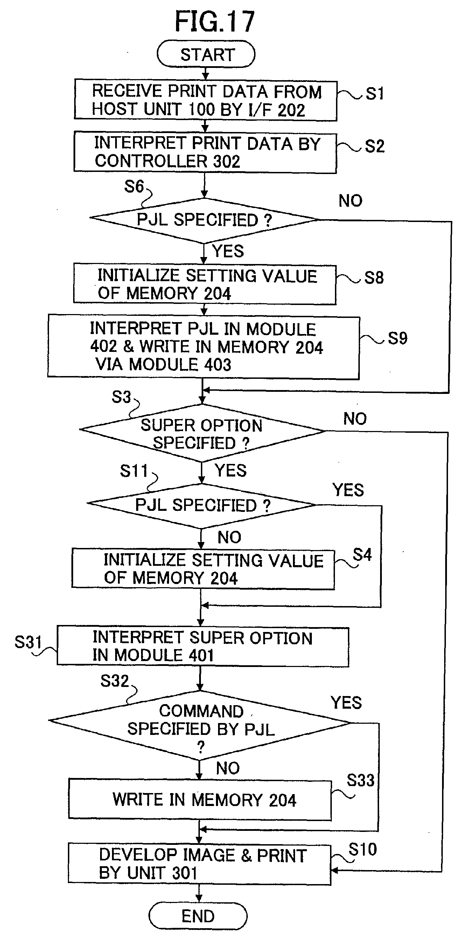

FIG. 17 is a flow chart for explaining a fourth embodiment of the operation of the printer controller 200. In this embodiment, a processing sequence is "PJL" → "super option", and an overwrite is carried out in a super option process only when the same setting is not made by the PJL. In FIG. 17, those steps which are the same as those corresponding steps in FIG. 15 are designated by the same reference numerals, and a description thereof will be omitted.

In FIG. 17, after the step S4 or, if the decision result in the step S11 is YES, a step S31 interprets the specified super option by the super option processing module 401 within the main image processing controller 302. A step S32 decides by the main image processing controller 302 whether or not the command specified by the interpreted super option is specified by the PJL. The process advances to a step S33 if the decision result in the step S32 is NO, and the process advances to the step S10 if the decision result in the step S32 is YES. The step S33 writes the setting value included in the specified super option, by the super option processing module 401 within the main image processing controller 302, into the setting value recording memory 204 via the memory write module 403, and the process advances to the step S10. This fourth embodiment of the operation of the printer controller 200 is particularly effective for a user who places priority on the specified PJL included in the print command.

Further, the present invention is not limited to these embodiments, but various variations and modifications may be made without departing from the scope of the present invention.

## Claims

1. An image processing unit **characterized by**:
receiving means for receiving a print command and print data;
first processing means for interpreting a printer description language and storing setting values corresponding to printing functions specified by the printer description language into storage means, if the printing functions are specified in the print command by the printer description language; and
second processing means for interpreting a printing option and storing setting values corresponding to printing functions specified by the printing option into the storage means, if the printing functions are specified in the print command by the printing option.

2. The image processing unit as claimed in claim 1, further **characterized by**:
control means for controlling a processing sequence of an interpretation by said first processing means and an interpretation by said second processing means.

3. The image processing unit as claimed in claim 1 or 2, **characterized in that** the setting values corresponding to the printing functions at least specify a paper supply tray and a paper eject tray of an image forming apparatus in which the image processing unit is provided.

4. The image processing unit as claimed in any of claims 1 to 3, further **characterized by**:
initializing means for initializing setting values stored in the storage means prior to storing the setting values by said first or second processing means.

5. The image processing unit as claimed in any of claims 1 to 4, **characterized in that** the print command specifies the printing option by a character string in the printer description language.

6. The image processing unit as claimed in any of claims 1 to 4, **characterized in that** the print command specifies the printing option by a description in a setting file which is prepared in advance.

7. An image forming apparatus **characterized by**:
storage means for storing setting values;
receiving means for receiving a print command and print data;
first processing means for interpreting a printer description language and storing setting values corresponding to printing functions specified by the printer description language into said storage means, if the printing functions are specified in the print command by the printer description language;
second processing means for interpreting a printing option and storing setting values corresponding to printing functions specified by the printing option into said storage means, if the printing functions are specified in the print command by the printing option; and
printing means for printing the print data on a recording medium based on the setting values stored in said storage means.

8. The image forming apparatus as claimed in claim 7, further **characterized by**:
control means for controlling a processing sequence of an interpretation by said first processing means and an interpretation by said second processing means.

9. The image forming apparatus as claimed in claim 7 or 8, **characterized in that** the setting values corresponding to the printing functions at least specify a paper supply tray and a paper eject tray of the image forming apparatus.

10. The image forming apparatus as claimed in any of claims 7 to 9, further **characterized by**:
initializing means for initializing setting values stored in said storage means prior to storing the setting values by said first or second processing means.

11. The image forming apparatus as claimed in any of claims 7 to 10, **characterized in that** the print command specifies the printing option by a character string in the printer description language.

12. The image forming apparatus as claimed in any of claims 7 to 10, **characterized in that** the print command specifies the printing option by a description in a setting file which is prepared in advance.

13. An image forming method **characterized by**:
a receiving step receiving a print command and print data;
a first processing step interpreting a printer description language and storing setting values corresponding to printing functions specified by the printer description language into storage means, if the printing functions are specified in the print command by the printer description language;
a second processing step interpreting a printing option and storing setting values corresponding to printing functions specified by the printing option into the storage means, if the printing functions are specified in the print command by the printing option; and
a printing step printing the print data on a recording medium based on the setting values stored in the storage means.

14. The image forming method as claimed in claim 13, further **characterized by**:
a control step controlling a processing sequence of an interpretation by said first processing step and an interpretation by said second processing step.

15. The image forming method as claimed in claim 13 or 14, **characterized in that** the setting values corresponding to the printing functions at least specify a paper supply tray and a paper eject tray of an image forming apparatus.

16. The image forming method as claimed in any of claims 13 to 15, further **characterized by**:
an initializing step initializing setting values stored in the storage means prior to storing the setting values by said first or second processing step.

17. The image forming method as claimed in any of claims 13 to 16, **characterized in that** the print command specifies the printing option by a character string in the printer description language.

18. The image forming method as claimed in any of claims 13 to 16, **characterized in that** the print command specifies the printing option by a description in a setting file which is prepared in advance.

19. The image forming method as claimed in any of claims 13 to 18, **characterized in that** said first and second processing steps overwrite the setting values specified by the printer description language and the setting values specified by the printing option, in the storage means.

20. The image forming method as claimed in claim 19, **characterized in that** said first and second processing steps carry out an overwrite only when no identical setting is specified by the printer description language and the printing option.

21. An image processing system for issuing a print command and print data from a host unit which is connectable to a printing apparatus via a network, **characterized in that** said printing apparatus is provided with:
first processing means for interpreting a printer description language and storing setting values corresponding to printing functions specified by the printer description language into storage means, if the printing functions are specified in the print command by the printer description language;
second processing means for interpreting a printing option and storing setting values corresponding to printing functions specified by the printing option into the storage means, if the printing functions are specified in the print command by the printing option; and
printing means for printing the print data on a recording medium based on the setting values stored in the storage means.

22. The image processing system as claimed in claim 21, **characterized in that** said printing apparatus is further provided with:
control means for controlling a processing sequence of an interpretation by said first processing means and an interpretation by said second processing means.

23. The image processing system as claimed in claim 21 or 22, **characterized in that** the setting values corresponding to the printing functions at least specify a paper supply tray and a paper eject tray of the printing apparatus.

24. The image processing system as claimed in any of claims 21 to 23, **characterized in that** said printing apparatus is further provided with:
initializing means for initializing setting values stored in the storage means prior to storing the setting values by said first or second processing means.

25. The image processing system as claimed in any of claims 21 to 24, **characterized in that** the print command issued from said host unit specifies the printing option by a character string in the printer description language.

26. The image processing system as claimed in any of claims 21 to 24, **characterized in that** the print command issued from said host unit specifies the printing option by a description in a setting file which is prepared in advance.

27. The image processing system as claimed in any of claims 21 to 26, **characterized in that** said first and second processing means of said printing apparatus overwrite the setting values specified by the printer description language and the setting values specified by the printing option, in the storage means.

28. The image processing system as claimed in claim 27, **characterized in that** said first and second processing means of said printing apparatus carry out an overwrite only when no identical setting is specified by the printer description language and the printing option.
